# EUROPEAN PATENT SPECIFICATION

(11) **EP 1 894 457 B1**
(45) Date of publication and mention of the grant of the patent: **24.02.2010**
(21) Application number: 06425611.8
(22) Date of filing: 01.09.2006
(51) Int. Cl.: A01B 71/08, F16D 3/84, F16P 1/02

(54) **Protective device for a mechanical connection**
Schutzvorrichtung für eine mechanische Kupplung
Dispositif de protection pour une liaison mécanique

(43) Date of publication of application: 05.03.2008
(73) Proprietor: Benzi & Di Terlizzi s.r.l., 20065 Inzago MI (IT)
(72) Inventor: Fedi, Alain, 70000 Villers Le Sec (FR)
(74) Representative: Ferraiolo, Ruggero

(56) References cited:
- EP-A1- 0 086 606
- WO-A-93/21752
- DE-C- 953 026
- DE-C1- 4 336 789
- US-A- 3 866 440
- US-A- 4 324 533
- US-B1- 6 203 440

## Description

The present invention relates to a protective device for a mechanical connection, in particular for a connection between rotating means and more particularly for a connection between a take-off shaft of a traction vehicle as a tractor and an universal-joint driveshaft which drives an agricultural implement, the universal-joint in such a connection being usually protected already by a conventional protection assembly.

In the area of said connections the problem rises of preventing accidental human contacts with the rotating parts not covered by said conventional protection assemblies as well as of removing the protective device without removing the protected means.

The prior art shows different ways of solving said problem.

Document US 6,203,440 of Bondioli discloses a protective second boot that protects parts adjacent to a fixed box from which there projects a rotating hub that is to be connected to a driveline and comprises, attached to the fixed box, a disc with a peripheral edge for engagement and fastening as well as a sleeve which can be engaged inside the edge of said disc by means of fastening clips capable of being clipped and unclipped from said edge. The main drawback of this protective device is the complication in operating the clips for clipping and unclipping the sleeve inside the edge; moreover the retaining capacity of the clips reduces rapidly with the work on the field. Finally, the number of pieces which form this device makes it more expensive than other devices as the one which is the object of the present invention.

A protective device manufactured by "Meccanoplast" of B. Bertani - Italy-whose possible patent references are not known, comprises a plastic casing which protects a universal-joint once an operator has fastened the casing to a metal disc on the take-off shaft by using a wrench for applying at least two bolts. The main drawback of this device lies in that the application and removal of the casing is made difficult by the use of the bolts and the wrench, the latter having to be available with the operator always during his work. Moreover, the bolts with their nuts may be lost around the working area during an assembling or disassembling operation. Moreover again, the bolts having not to be tightened hardly against the plastic makes the connection not so reliable.

Document US 6,123,622 of Mikeska et al., assigned to Walterscheid GmbH, discloses a protective device for a driveshaft with two universal joints having a protective cone associated with the first universal joint and having an extension in the form of cone portion wherein a sleeve is received in a rotationally fast way, the sleeve cooperating with an adapter ring stationarely secured to an agricultural implement. The main drawbacks of this device are the complication of the outer portion removal which requires two special tools and the number of separate parts that have to be manufactured and assembled and cause the cost of the device to rise. Another drawback is that this device can not be used in any connection arrangement, in particular its attaching cap can only be applied to the devices produced by Walterscheid.

A protective device manufactured by Weasler Agdrive - USA - whose possible patent references are not known discloses a device comprising a number of separate parts that have to be manufactured and assembled and cause the cost of this device to rise. Moreover, in an assembling or disassembling operation in the field one or more of the small parts comprised therein may be lost.

Document US-A-4 324 533 discloses a device for protecting the rotating drive connection between a drive motor and a pump wherein a first element in the form of a cap for a second element forming a guard has a surface provided with apertures for fixing around the drive connection at the side of the pump and has a peripheral longitudinal edge provided with first and second receiving means for receiving securing means. So, the first element caps the apertures of the guard at the guard end opposite to the drive motor and the securing means are screws that pass through corresponding holes in the guard and cap. This device is cited here only as an example of a cap provided with apertures in its surface and with receiving means in its peripheral edge.

The invented protective device abviates all the above drawbacks and offers advantages that will be pointed out forward.

In the following description it is assumend that the device is seen in horizontal position and as proximal end is intended the end of a piece near the take-off shaft of a vehicle.

This protective device comprises a first element in the form of an attaching cap adapted to be attached round the take-off shaft of a traction vehicle and to receive in engagement connection a second element in the form of a covering guard long enough to cover all those mechanical means which otherwise would be accessible for the hands of an operatotor, apertures being provided in the surface of the attaching cap for fixing round the take-off shaft and a peripheral longitudinal edge in the attaching cap being provided with first and second receiving means for receiving securing means, the protective device being characterized in that
a) - the securing means are provided in the covering guard;
b) - the covering guard bears symmetrically spaced from each other and adjacent to its proximal end:
   i) first securing means capable of engaging longitudinally with said first receiving means once the covering guard is applied to the attaching cap;
   ii) second securing means capable of engaging radially with said second receiving means once the first securing means is applied to the attaching cap;

In particular:

The first receiving means in the cap are apertures which receive longitudinally corresponding securing means in the guard and are provided with transversal recesses into which the securing means rotate and the second receiving means are holes for receiving second securing means.

Alternatively, the first receiving means in the cap is a cap screw thread made on one of its surfaces, inner or outer, and the securing means in the guard is a guard screw thread made on the corresponding surface in the guard adapted to be screwed to said cap screw thread realizing a longitudinal penetration of the guard into the cap. The second securing means are resilient means capable of lowering once the covering guard is applied to the attaching cap and then rising for engaging into a corresponding aperture.

Alternatively, the second the securing means are pin elements like bolts or cotter pins capable of passing through corresponding holes in the attaching cap and in the covering guard.

It is realized that the protective guard and the attaching cap of the invented protective device are made in plastic preferably, although they may be of metal or another suitable material.

A first advantage of this device lies in that no tool is required for assembling in the working position. A second advantage lies in that a single little bar only is required for removing the device, the bar being for instance a thin steel bar long enough for entering the mouth of the resilient means covering means and lowering the securing means in the form of a said resilient means received in a hole of the attaching cap. Another advantage is that the guard can not be removed accidentally from the attaching cap since the only way to remove the guard is to use said little bar. Still another advantage is that the guard may be removed from the attaching cap and made to slide longitudinally for easily allowing repairs of, access to and engagement with the mechanical connection without requiring the total removal of the guard.

The invention will now be described by way of example and with reference to the attached drawings in which:
- Fig. 1 is a first axonometric view,
- Fig. 2 is a second axonometric view,
- Fig. 3 is third axonometric view and
- Fig. 4 is a partly sectioned view of a detail.

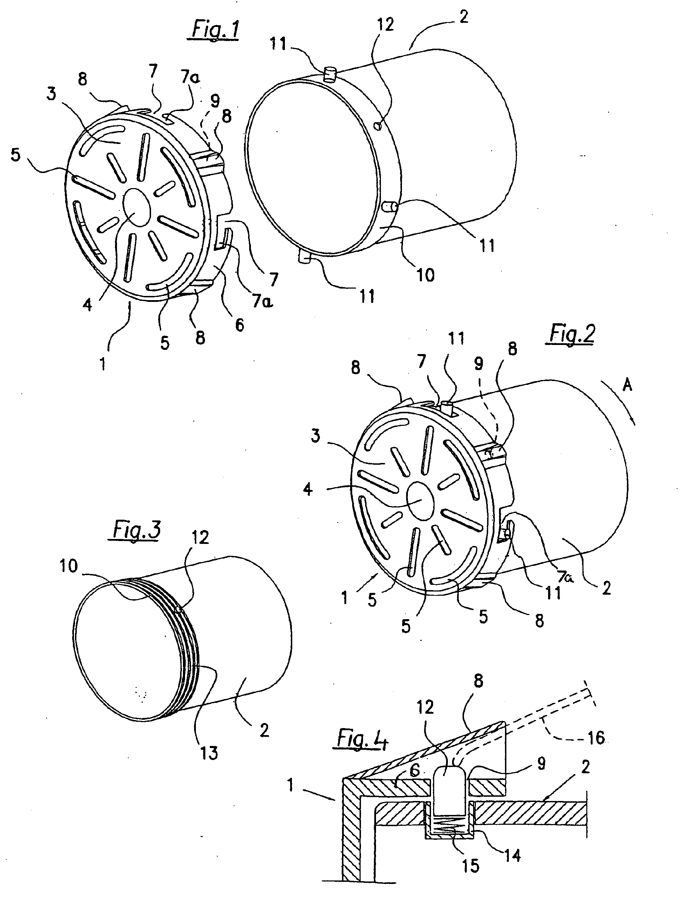

Fig. 1 shows the attaching cap 1 and the guard 2 positioned one in front of the other in the position they will take before coupling. In the vertical surface 3 the attaching cap is provided with a central hole 4 for the passage of the take-off shaft of the traction vehicle, not shown, and with a number of slots 5 for fixing to a plate member in the traction vehicle. In the longitudinal peripheral edge 6 the attaching cap is provided with four open means 7 for receiving corresponding securing means made in the guard and is provided with four shells 8 for covering part of the securing means. The open means 7 are open along the edge and comprise a perimetral recess 7a. Four holes 9 are made in said edge 6, each below one of said shells 8 for receiving the part of the securing means. The figure shows the guard 2 whose proximal end 10 is provided with four radially projecting first securing means in the form of studs 11 and four radially projecting securing second resilient means in the form of pins 12 that are so positioned that, once the guard is forced into the hollow of the attaching cap 1, the securing studs 11 penetrate into the open means 7 and the pins 12 are lowered. The securing studs 11 are made by elements integral with the guard 1 and capable of penetrating into the open means 7.

Fig. 2 shows the two parts 1 and 2 of the protective device engaged in the working position. Once the securing studs 11 of the guard 2 have been forced longitudinally into the open means 7 of the attaching cap 1 fixed to the traction means, the guard 2 has been rotated according to arrow A and the studs elements 11 are moved into the perimetral recesses 7a and the tip of the pins 12 set into the holes 9.

Fig. 3 shows a guard 2 in which the first securing means is a guard screw thread 13 made on the proximal edge 10 of the outer surface and the second securing means is a resilient pin 12 . The screw thread 13 will be screwed into a corresponding screw thread 13a, not shown in the figure, made in the inner surface of the attaching cap edge 6 so realizing a longitudinal penetration of the guard 2 into the attaching cap 1. In an alternative embodiment the screw threads may be reversed, the screw thread 13 may be made on the inner surface of the protective guard (2) and the screw thread 13a will be made on the outer surface of the attaching cap (1).

Fig. 4 shows one of the second securing means 12 in the covering guard 2 engaged already in one of the second receiving means 9 in the edge 6 of the attaching cap 1. Each of the securing means 12 is a pin which is made resilient by a helicoidal spring 15 located between the bottom of the bush 14 engaged in the guard 2 and the lower wall of the pin 12. The half shell 8 protects the pin 12 from accidental pressures, whilst the the disengagement of the pin 12 from the hole 9 may be obtained through a bar 16 conveniently used by an operator.

## Claims

1. Protective device for a mechanical connection comprising a first element (1) in the form of an attaching cap adapted to he attached round the take-off shaft of a traction vehicle and to receive in engagement connection a second element (2) in the form of a covering guard long enough to cover all those mechanical means which otherwise would be accessible for the hands of an operator, apertures (5) being provided in the surface of the attaching cap (1) for fixing round the take-off shaft and a peripheral longitudinal edge (6) in the attaching cap being provided with first and second receiving means (7, 9) for receiving securing, means (11, 12), the protective device being **characterized in that**
a) - the securing means (11, 12) are provided on the covering guard (2);
b) - the covering guard (2) bears perimetrically spaced from each other and adjacent to its proximal end:
i) first securing means (11) capable of engaging longitudinally with said first receiving means (7) once the covering guard (2) is applied to the attaching cap (1);
ii) second securing means (12) capable of engaging radially with said second receiving means (9) once the covering guard (2) is applied to the attaching cap (1).

2. Protective device according to claim 1 **characterized in that** the first receiving means (7) in the cap (1) are apertures (7) which receive longitudinally corresponding first securing means (11) in the covering guard (2) and are provided with transversal recesses (7a) into which the first securing means (11) rotate and the second receiving means are apertures (9) for receiving the second securing means (12).

3. Protective device according to claim 1 **characterized in that** the attaching cap (1) is provided with covering means (8) for covering the apertures (9) adapted to receive the second securing means (12).

4. Protective device according to claim 1 - 3 **characterized in that** the cap second securing means are resilient means (12) capable of lowering once the covering guard (2) is applied to the attaching cap (1) and then rising for engaging into a corresponding aperture (9) in the cap.

5. Protective device according to claims 1 - 3 **characterized in that** the second securing means are pin elements adapted to be passed through corresponding holes in the attaching (1) cap and in the covering guard (2) once the first receiving and securing means are connected.

6. Protective device for a mechanical connection comprising a first element (1) in the form of an attaching cap adapted to be attached round the take-off shaft of a traction vehicle and to receive in engagement connection a second element (2) in the form of a covering guard long enough to cover all those mechanical means which otherwise would be accessible for the hands of an operator, apertures (5) being provided in the surface of the attaching cap (1) for fixing round the take-off shaft and a peripheral longitudinal edge (6) in the attaching cap being provided with receiving means (913a) for receiving first and second securing means (12, 13) made in the covering guard, the protective device being **characterized in that** the first securing means is a guard screw thread (13) which fits the receiving means as a cap screw thread made in the peripheral longitudinal edge (6) in the attaching cap (1) and the second securing means are resilient means (12) capable of lowering once the covering guard is applied to the attaching cap and then rising for engaging into a corresponding receiving means (9) in the form of an aperture.

## Patentansprüche

1. Schutzvorrichtung für eine mechanische Verbindung umfassend ein erstes Element (1) in der Form einer Befestigungskappe, die angepasst ist, um die Abtriebswelle eines Zugfahrzeugs herum befestigt zu werden und in Eingriffsverbindung ein zweites Element (2) in der Form eines Abdeckungsschutzes aufzunehmen, der lang genug ist, all jene mechanischen Mittel abzudecken, die andernfalls für die Hände einer Bedienperson zugänglich wären, wobei Öffnungen (5) in der Oberfläche der Befestigungskappe (1) zum Befestigen um die Abtriebswelle herum vorgesehen sind und eine periphere Längskante (6) In der Befestigungskappe vorgesehen ist mit ersten und zweiten Aufnahmemitteln (7, 9) zum Aufnehmen von Sicherungsmitteln (11, 12), wobei die Schutzvorrichtung **dadurch gekennzeichnet ist, dass**
a) - die Slcherungsmittel (11, 12) auf dem Abdeckungsschutz (2) vorgesehen sind;
b) - der Abdeckungsschutz (2) perimetrisch voneinander beabstandet und angrenzend an sein proximales Ende trägt:
i) erste Sicherungsmittel (11), die in der Lage sind, in Längsrichtung mit den ersten Aufnahmemitteln (7) einzugreifen, wenn der Abdeckungsschutz (2) auf der Befestigungskappe (1) aufgebracht ist;
ii) zweite Sicherungsmittel (12), die in der Lage sind, radial mit den zweiten Aufnahmemitteln (9) einzugreifen, wenn der Abdeckungsschutz (2) auf der Befestigungskappe (1) aufgebracht ist.

2. Schutzvorrichtung gemäß Anspruch 1, **dadurch gekennzeichnet, dass** die ersten Aufnahmemittel (7) in der Kappe (1) Öffnungen (7) sind, die in Längsrichtung entsprechende erste Sicherungsmittel (11) in dem Abdeckungsschutz (2) aufnehmen und mit quer verlaufenden Ausnehmungen (7a) versehen sind, in welche die ersten Sicherungsmittel (11) hineindrehen, und die zweiten Aufnahmemittel Öffnungen (9) zum Aufnehmen der zweiten Sicherungsmittel (12) sind.

3. Schutzvorrichtung gemäß Anspruch 1, **dadurch gekennzeichnet, dass** die Befestigungskappe (1) mit Abdeckungsmittel (8) zum Abdecken der Öffnungen (9), die angepasst sind zum Aufnehmen der zweiten Sicherungsmittel (12), versehen ist.

4. Schutzvorrichtung gemäß Ansprüchen 1 bis 3, **dadurch gekennzeichnet, dass** die zweiten Sicherungsmittel der Kappe federnde Mittel (12) sind, die in der Lage sind, sich abzusenken, wenn der Abdeckungsschutz (2) auf die Befestigungskappe (1) aufgebracht wird, und sich dann erheben, um in eine entsprechende Öffnung (9) in der Kappe einzugreifen.

5. Schutzvorrichtung gemäß Ansprüchen 1 bis 3, **dadurch gekennzeichnet, dass** die zweiten Sicherungsmittel Stiftelemente sind, die angepasst sind, durch entsprechende Löcher in der Befestigungskappe (1) und in dem Abdeckungsschutz (2) hindurchgeführt zu werden, wenn die ersten Aufnahme- und Sicherungsmittel verbunden werden.

6. Schutzvorrichtung für eine mechanische Verbindung umfassend ein erstes Element (1) in der Form einer Befestigungskappe, die angepasst ist, um die Abtriebswelle eines Zugfahrzeugs herum befestigt zu werden und in Eingriffsverbindung ein zweites Element (2) in der Form eines Abdeckungsschutzes, der lang genug ist, all jene mechanischen Mittel abzudecken, die andernfalls für die Hände einer Bedienperson zugänglich wären, aufzunehmen, wobei Öffnungen (5) in der Oberfläche der Befestigungskappe (1) zum Befestigen um die Abtriebswelle herum vorgesehen sind und eine periphere Längskante (6) in der Abdeckkappe mit Aufnahmemitteln (9, 13a) zum Aufnehmen erster und zweiter Sicherungsmittel (12, 13), die in dem Abdeckungsschutz hergestellt sind, versehen ist, wobei die Schutzvorrichtung **dadurch gekennzeichnet** t ist, dass das erste Sicherungsmittel ein Schutzschraubgewinde (13) ist, das mit dem Aufnahmemittel als ein Kopfschraubengewinde, das in der peripheren Längskante (6) in der Befestigungskappe (1) hergestellt ist, zusammenpasst und die zweiten Sicherungsmittel federnde Mittel (12) sind, die in der Lage sind, sich abzusenken, wenn der Bedeckungsschutz auf die Befestigungskappe aufgebracht wird, und sich dann zu erheben, um in ein entsprechendes Aufnahmemittel (9) in der Form einer Öffnung einzugreifen.

## Revendications

1. Dispositif de protection d'une liaison mécanique comprenant :
un premier élément (1) sous la forme d'un capuchon de fixation destiné à être fixé autour de l'arbre de sortie d'un véhicule de traction et recevoir par une liaison par engagement, un second élément (2) sous la forme d'un manchon de recouvrement suffisamment long pour couvrir tous les moyens mécaniques qui seraient sinon accessibles aux mains d'un opérateur, des orifices (5) étant réalisés dans la surface du capuchon de fixation (1) pour être fixé autour de l'arbre de sortie, ainsi qu'un bord longitudinal périphérique (6) du capuchon de fixation, muni d'un premier et d'un second moyen de réception (7, 9) pour recevoir des moyens de fixation (11, 12),
dispositif de protection **caractérisé en ce que**
a) les moyens de fixation (11, 12) sont prévus sur le manchon de recouvrement (2),
b) le manchon de recouvrement (2) porte en périphérie de façon espacée l'un de l'autre et de manière adjacente à son extrémité proximale :
i) un premier moyen de fixation (11) permettant de recevoir longitudinalement le premier moyen de réception (7), dès que le manchon de recouvrement (2) est appliqué sur le capuchon de fixation (1),
ii) des seconds moyens de fixation (12) successible de s'engager radialement avec le second moyen de réception (9), dès que le manchon de recouvrement (2) est appliqué sur le capuchon de fixation (1).

2. Dispositif de protection selon la revendication 1,
**caractérisé en ce que**
les premiers moyens de réception (7) du capuchon (1) sont des orifices (7) recevant longitudinalement des premiers moyens de fixation (11) correspondants, du manchon de recouvrement (2) et munis de cavités transversales (7a) dans lesquelles les premiers moyens de fixation (11) tournent et les seconds moyens de réception sont des ouvertures (9) pour recevoir les seconds moyens de fixation (12).

3. Dispositif de protection selon la revendication 1,
**caractérisé en ce que**
le capuchon de fixation (1) comporte un moyen de recouvrement (8) pour couvrir les orifices (9) recevant les seconds moyens de fixation (12).

4. Dispositif de protection selon l'une des revendications 1 à 3,
**caractérisé en ce que**
les seconds moyens de fixation du capuchon, sont des moyens élastiques (12) susceptibles de s'abaisser dès que le manchon de recouvrement (2) est appliqué sur le capuchon de fixation (1), puis se relever pour coopérer avec un orifice (9) correspondant réalisé dans le capuchon.

5. Dispositif de protection selon l'une des revendications 1 à 3,
**caractérisé en ce que**
les seconds moyens de fixation sont des éléments en forme de broches susceptibles de traverser les orifices correspondants du capuchon de fixation (1) et le manchon de recouvrement (2), dès que les premiers et les seconds moyens de fixation sont reliés.

6. Dispositif de protection d'une liaison mécanique comprenant :
un premier élément (1) sous la forme d'un capuchon de fixation destiné à être fixé autour de l'arbre de sortie d'un véhicule de traction et recevoir, par une liaison par engagement, un second élément (2) sous la forme d'un manchon de recouvrement, suffisamment long, pour couvrir tous les moyens mécaniques qui, sinon, seraient accessibles aux mains d'un opérateur, les orifices (5) étant prévus dans la surface du capuchon de fixation (1) pour être fixés autour de l'arbre de sortie et un bord longitudinal périphérique (6), dans le capuchon de fixation, muni de moyens de réception (9, 13a) pour recevoir les premiers et les seconds moyens de fixation (12, 13) réalisés dans le manchon de recouvrement, dispositif de protection **caractérisé en ce que**
les premiers moyens de fixation sont constitués par un filetage de protection (13) qui reçoit de manière ajustée le premier moyen de réception sous la forme d'un filetage de capuchon, réalisé dans le bord longitudinal périphérique (6) du capuchon de fixation (1), et les seconds moyens de fixation, sont des moyens élastiques (12) susceptibles de s'abaisser dès que le capuchon de recouvrement est appliqué sur le capuchon de fixation puis, se relever dans un moyen de réception (9) correspondant, sous la forme d'un orifice.
